# EUROPÄISCHE PATENTSCHRIFT

(11) **EP 3 530 101 B1**
(45) Veröffentlichungstag und Bekanntmachung des Hinweises auf die Patenterteilung: **30.04.2025**
(21) Anmeldenummer: 18211600.4
(22) Anmeldetag: 11.12.2018
(51) Int. Cl.: A01D 43/08, A01F 29/09

(54) **SELBSTFAHRENDER FELDHÄCKSLER**
SELF-PROPELLED CHAFF CUTTER
RÉCOLTEUSE-HACHEUSE-CHARGEUSE DE FOURRAGE AUTOMOTRICE

(30) Priorität: 26.02.2018 DE 102018104288
(43) Veröffentlichungstag der Anmeldung: 28.08.2019
(73) Patentinhaber: CLAAS Selbstfahrende Erntemaschinen GmbH, 33428 Harsewinkel (DE)
(72) Erfinder: Heitmann, Christoph, 48231 Warendorf (DE); Bönig, Ingo, 33330 Gütersloh (DE); Birkhofer, Stefan, 78333 Stocknach (DE); Kajtar, Peter, 88348 Bad Saulgau (DE); Harsch, Sebastian, 88348 Bad Saulgau (DE); Wehner, Gregor, 88356 Ostrach Unterweiler (DE)
(74) Vertreter: Dekker, Lothar Karl Rudolf

(56) Entgegenhaltungen:
- EP-A1- 2 130 422
- EP-A1- 2 517 549
- EP-A1- 3 085 221
- EP-B1- 2 735 222

## Beschreibung

### Selbstfahrender Feldhäcksler

Die vorliegende Erfindung betrifft einen selbstfahrenden Feldhäcksler gemäß dem Oberbegriff des Anspruches 1.

Ein selbstfahrender Feldhäcksler ist mit einer Einzugsvorrichtung, an der ein Vorsatzgerät angeordnet ist, mit einer Häckselvorrichtung, umfassend eine rotierend angetriebene Häckseltrommel mit Häckselmessern und eine Gegenschneide, zum Zerkleinern von Erntegut sowie einen zwischen Gegenschneide und einem Auswurfkanal angeordneten relativ zu der Häckseltrommel abstandsveränderlichen Trommelboden ausgestattet. Des Weiteren ist der Feldhäcksler mit einem Fahrerassistenzsystem zur Ansteuerung zumindest der Häckselvorrichtung ausgeführt, wobei das Fahrerassistenzsystem einen Speicher zum Hinterlegen von Daten und eine Rechenvorrichtung zur Verarbeitung der in dem Speicher hinterlegten Daten umfasst.

Ein selbstfahrender Feldhäcksler der eingangs genannten Art ist aus der EP 2 735 222 B1 bekannt. Das Dokument EP 2 517 549 A1 beschreibt eine Vorfelderkennung mit dem Ziel die Erntemaschinen wie z.B. Feldhäcksler Massendurchsätze anzupassen um Verstopfungen/Stauungen zu vermeiden. Zur Ansteuerung einer Aktuatorik, mit der der Abstand des Trommelbodens gegenüber der Häckseltrommel bzw. der Häckselmesser verändert wird, ist gemäß der EP 2 735 222 B1 vorgesehen, einen sensorisch erfassbaren Betriebsparameter, der innerhalb des Gutflussweges durch den Feldhäcksler erfasst wird, heranzuziehen. Die Einstellung des Abstandes des Trommelbodens gegenüber der Häckseltrommel bzw. der Häckselmesser erfolgt im Rahmen einen Soll-Istwert-Vergleichs. Das Erfassen eines oder mehrerer unterschiedlicher Betriebsparameters innerhalb des Gutflussweges erfordert neben spezifischen Sensoren zudem eine rasche Auswertung zur Generierung eines Steuerbefehls und eine schnelle Umsetzung der Ansteuerung durch die Aktuatorik. Ausgehend vom vorstehend genannten Stand der Technik liegt der Erfindung die Aufgabe zugrunde, einen Feldhäcksler der eingangs genannten Art in der Weise weiterzubilden, dass dieser sich durch eine effizientere Ansteuerung des Trommelbodens auszeichnet.

Diese Aufgabe wird erfindungsgemäß durch die Merkmale des Anspruches 1 gelöst.

Vorteilhafte Weiterbildungen sind Gegenstand der Unteransprüche.

Zur Lösung dieser Aufgabe wird gemäß dem Anspruch 1 wird ein selbstfahrender Feldhäcksler vorgeschlagen, mit einer Einzugsvorrichtung, an der ein Vorsatzgerät angeordnet ist, mit einer Häckselvorrichtung, umfassend eine rotierend angetriebene Häckseltrommel mit Häckselmessern und eine Gegenschneide, zum Zerkleinern von Erntegut sowie einen zwischen der Gegenschneide und einem Auswurfkanal angeordneten relativ zu der Häckseltrommel abstandsveränderlichen Trommelboden, sowie mit einem Fahrerassistenzsystem zur Ansteuerung zumindest der Häckselvorrichtung, wobei das Fahrerassistenzsystem einen Speicher zum Hinterlegen von Daten und eine Rechenvorrichtung zur Verarbeitung der in dem Speicher hinterlegten Daten umfasst. Dabei ist vorgesehen, dass die Häckselvorrichtung zusammen mit dem Fahrerassistenzsystem einen Häckseltrommelautomaten bildet, indem die Rechenvorrichtung dazu eingerichtet ist, zumindest eine Eigenschaft eines aufzunehmenden Erntegutes mittels einer Vorrichtung zur Vorfelderkennung vorausschauend zu bestimmen, um den Abstand zwischen der Häckseltrommel und dem Trommelboden in Abhängigkeit von der zumindest einen Eigenschaft des Erntegutes fortlaufend autonom zu ermitteln und zu adaptieren. Mittels der Vorrichtung zur Vorfelderkennung wird zumindest eine inhaltsstoffunabhängige Eigenschaft des sich vor dem Vorsatzgerät befindlichen Erntegutes, die sich zyklisch verändert, detektiert. Unter einer inhaltsstoffunabhängigen Eigenschaft ist das Vorhandensein von Erntegut, eine Bestands- oder Wuchsdichte oder eine Bestandshöhe des Erntegutes zu verstehen. Weiterhin zählt dazu die Darreichungsform des aufzunehmenden Erntegutes als noch abzuschneidender Bestand auf einem Feld oder als bereits geschnittenes Erntegut auf dem Feldboden liegend, insbesondere in Form einer Schwad. Anhand zumindest einer Eigenschaft des Erntegutes wird der Abstand des Trommelbodens zu der Häckseltrommel respektive zum Hüllkreis der rotierenden Häckselmesser optimal angepasst, bevor sich eine Änderung der zumindest einen Eigenschaften des Erntegut auf den Häckselprozess auswirken kann.

Dabei erfolgt die Adaption des Abstands in Abhängigkeit von zumindest einem Betriebsparameter des Feldhäckslers. Verschiedene Betriebsparameter des Feldhäckslers werden sensorisch überwacht, um dessen sicheren und effizienten Betrieb zu gewährleisten. Insbesondere entlang des Gutflussweges sind Sensoren vorgesehen, welche der Überwachung von Arbeitsaggregaten wie der Einzugsvorrichtung oder der Häckselvorrichtung dienen.

Dabei kann ein Betriebsparameter ein Durchsatz an Erntegut sein. Die Größenordnung des Durchsatzes an Erntegut ist maßgeblich für die Einstellung des Abstands zwischen der Häckseltrommel und dem Trommelboden. Die Überwachung des Durchsatzes erfolgt am Feldhäcksler üblicher in dessen Einzugskanal, was zu sehr kurzen Reaktionszeiten führt, wenn es zu Änderungen im Durchsatz kommt. In Verbindung mit der Vorrichtung zur vorausschauenden Vorfelderkennung kann diese Reaktionszeit ausgedehnt werden. Das Heranziehen des Betriebsparameters Durchsatz dient dazu, die Reglung des Abstands durch den Häckseltrommelautomaten zu präzisieren und zu optimieren. Während das Ende eines Bestands oder eines Schwads durch die Vorrichtung zur vorausschauenden Vorfelderkennung eindeutig zu bestimmen ist, können die Auswirkungen anderer Ernteguteigenschaften auf den Betriebsparameter Durchsatz, wie eine sich, insbesondere temporär, ändernde Bestandsdichte, unter Umständen nicht mit einer solchen Genauigkeit bestimmt werden. Da zumindest eine Schwankung in der Bestandsdichte als solches erkennbar ist, kann der Abstand zwischen der Häckseltrommel und dem Trommelboden bereits tendenziell entsprechend angepasst werden. Insbesondere kann der Häckseltrommelautomat dazu eingerichtet sein, bei einem Unterschreiten eines Schwellwertes für den Durchsatz an Erntegut den Abstand auf einen vorgebbaren Ausgangsabstand einzustellen. Dies ist insbesondere bei einem Verlassen des Bestandes an einem Feldende im Vorgewende sinnvoll. Der Abstand wird hierbei auf den vorgebaren Ausgangsabstand zurückgeführt, so dass bei einem nachfolgenden Wiedereinfahren in den Bestand ein für den Trommelboden optimaler Abstand eingestellt wird. Somit können während des Aufbaus des Erntegutsstroms Gutflussprobleme, insbesondere ein Verstopfen, vermieden werden.

Bevorzugt kann der Häckseltrommelautomat dazu eingerichtet sein, bei einem Überschreiten eines Schwellwertes für den Durchsatz an Erntegut den Abstand durchsatzabhängig zu verändern.

Erfindungsgemäß ist ein Betriebsparameter die Art des Vorsatzgerätes. Insbesondere kann ein Betriebsparameter der Betriebszustand zumindest eines der Arbeitsaggregate Vorsatzgerät, Einzugsvorrichtung oder Häckselvorrichtung sein. In Abhängigkeit von der Art des Erntegutes kommen an dem Feldhäcksler unterschiedliche Vorsatzgeräte zum Einsatz. So werden beispielsweise zur Ernte von Mais sogenannte Maisgebisse verwendet, während Gras in der Regel mittels einer sogenannten Pickup aufgenommen wird, welches als Schwad auf dem Feldboden abgelegt wurde. Diese Vorsatzgeräte werden von einer Steuerungsvorrichtung des Feldhäckslers angesteuert, so dass spezifische Informationen über die Art des jeweils angeschlossenen Vorsatzgerätes vorliegen. In Abhängigkeit von der Art des angeordneten Vorsatzgerätes wird an den Häckseltrommelautomat eine Information über das Vorsatzgerät übermittelt, so dass von dem Häckseltrommelautomat auf die Art des Erntegutes geschlossen werden kann. Diese Information wird zur Einstellung des vorgebbaren Ausgangsabstandes herangezogen. Des Weiteren kann der Betriebszustand zumindest eines der Arbeitsaggregate als Betriebsparameter Berücksichtigung finden. Unter Betriebszustand ist zu verstehen, ob das jeweilige Arbeitsaggregat in Betrieb ist oder nicht. Ebenfalls ist unter einem Betriebszustand eine Arbeitsposition eines der Arbeitsgeräte zu verstehen. Insbesondere Vorsatzgeräte werden aus einer Arbeitsposition in eine Nichtarbeitsposition überführt, wenn das Ende eines Bestandabschnittes erreicht wird. Für die nahezu die vollständige Dauer einer Vorgewendefahrt bleibt das Vorsatzgerät in seiner Nichtarbeitsposition, bis es kurz vor einem Wiedereintritt in den Bestand in seine Arbeitsposition Überführt wird. In Übereinstimmung damit kann auch der Trommelboden entsprechend dem jeweiligen Betriebszustand angesteuert werden, um dessen Abstand zur Häckseltrommel anzupassen. Durch die zusätzliche Berücksichtigung des Betriebszustands eines Arbeitsaggregates kann sichergestellt werden, dass eine Unterbrechung des Ernteprozesses auf einem abzuarbeitenden Feld nicht zu einer fehlerhaften Einstellung des Abstandes des Trommelbodens führt.

Gemäß einer bevorzugten Weiterbildung kann die Vorrichtung zur vorausschauenden Vorfelderkennung zumindest eine optische Sensoreinrichtung umfassen, die dem Feldhäcksler zugeordnet ist. Besonders bevorzugt kann die zumindest eine optische Sensoreinrichtung an dem Vorsatzgerät angeordnet sein. Alternativ oder ergänzend kann die zumindest eine optische Sensoreinrichtung an einer Kabine des Feldhäckslers angeordnet sein. Ein horizontaler als auch vertikaler Neigungswinkel der zumindest einen Sensoreinrichtung ist veränderbar.

Dabei kann vorgesehen sein, dass die zumindest eine optische Sensoreinrichtung elektromagnetische Wellen emittiert.

Besonders bevorzugt kann die zumindest eine optische Sensoreinrichtung als eine Kamera oder ein Laserscanner ausgebildet sein. Die Kamera kann bevorzugt als eine 2D- oder 3D-Kamera ausgebildet sein. Durch eine in dem Speicher des Fahrerassistenzsystems hinterlegten Bildanalysesoftware können die Signale der zumindest einen optischen Sensoreinrichtung ausgewertet werden. Auf diese Weise kann das Auftreten einer Änderung zumindest einer Eigenschaft eines aufzunehmenden Erntegutes bestimmt und räumlich bewertet werden. D.h., dass zusammen mit der Kenntnis der Fahrgeschwindigkeit des Feldhäckslers kann der der Häckseltrommelautomat den Zeitpunkt relativ genau bestimmen, zu dem eine Anpassung des Abstands erforderlich ist.

So kann zur Veränderung des Abstands eine Aktuatorik vorgesehen sein, die durch das Fahrerassistenzsystem ansteuerbar ist. Die Aktuatorik kann als zumindest ein Hydraulikzylinder ausgebildet sein. Der Hydraulikzylinder ließe sich in das üblicherweise ohnehin vorhandene Hydrauliksystem des Feldhäckslers integrieren. Der Vorteil des zumindest einen Hydraulikzylinders besteht in der Reaktionsschnelligkeit, mit der Änderungen im Abstand realisierbar sind. Alternativ kann die Aktuatorik als zumindest ein Linearmotor ausgeführt sein.

Bevorzugt kann ein Mittel zur Einhaltung eines Mindestabstandes zwischen der Häckseltrommel und dem Trommelboden vorgesehen sein. Um zu vermeiden, dass es zwischen den Häckselmessern und dem Trommelboden aufgrund der Anpassung des Abstands zu einer Kollision kommt, kann ein Näherungssensor vorgesehen sein, welcher den Abstand zwischen der Häckseltrommel und dem Trommelboden überwacht. Damit kann dem Umstand Rechnung getragen werden, dass ein in Abständen durchzuführendes Naschschleifen der Häckselmesser zu einer Verringerung des Hüllkreises führt, so dass der Ausgangsabstand ebenfalls angepasst werden sollte. Es sind auch alternative Ausgestaltungen des Mittels denkbar, die eine Kollision vermeiden sollen, wobei diese die vorstehend genannte Anpassung des Ausgangsabstandes berücksichtigen sollten. Beispielsweise kann ein mechanischer Anschlag vorgesehen werden, der, in radialer Richtung verstellbar, dem Trommelboden zugeordnet ist.

Die vorliegende Erfindung wird nachstehend anhand eines in den Zeichnungen dargestellten Ausführungsbeispieles näher erläutert.

Es zeigen:
- Fig. 1: eine schematische Darstellung eines Feldhäckslers in einer Seitenansicht;
- Fig. 2: eine schematische Darstellung einer Häckseltrommel einer Häckselvorrichtung eines Feldhäckslers;
- Fig. 3: eine Detailansicht eines Trommelbodens in einer ersten Position;
- Fig. 4: eine Detailansicht eines Trommelbodens in einer zweiten Position.

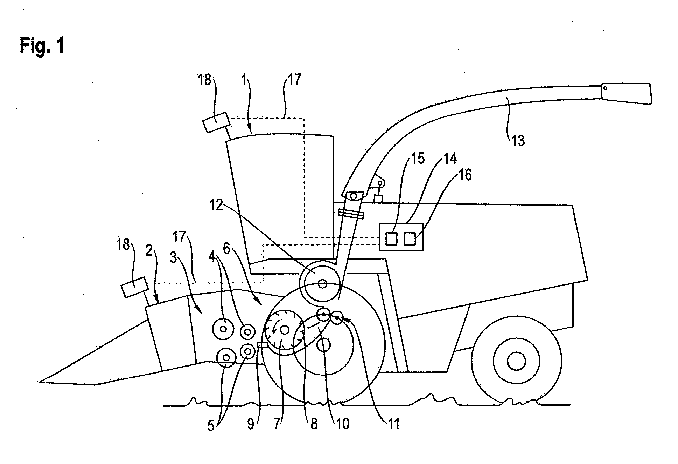

In Fig. 1 ist ein selbstfahrender Feldhäcksler 1 in einer Seitenansicht schematisch dargestellt, der mit einem Vorsatzgerät 2 versehen ist. In der Fig. 1 ist als Vorsatzgerät 2 ein Maispflücker schematisch angedeutet, es können jedoch auch andere Vorsatzgeräte wie beispielsweise eine Pickup an den Feldhäcksler 1 angebaut sein. Das Vorsatzgerät 2 nimmt das Erntegut vom Feld auf und fördert es einer Einzugsvorrichtung 3 zu, die im Ausführungsbeispiel aus einer Walzengruppe mit oberen Walzen 4 und unteren Walzen 5 besteht. Die Walzen 4, 5 der Einzugsvorrichtung 3 üben eine Presskraft auf das aufgenommene Erntegut aus. Die Einzugsvorrichtung 3 fördert das zu einer Erntegutmatte verdichtete Erntegut einer Häckselvorrichtung 6 zu, welche eine rotierend angetriebene Häckseltrommel 7 mit Häckselmessern 8 aufweist. Die Häckselmesser 8 schneiden die von der Einzugsvorrichtung 3 zugeführte Erntegutmatte an einer Gegenschneide 9. Das geschnittene bzw. gehäckselte Erntegut wird durch die Rotationsbewegung der Häckseltrommel 7 in einen nachgeordneten Auswurfschacht 10 geschleudert, von wo es je nach Ausstattung des Feldhäckslers 1 durch eine optional im Gutflussweg angeordnete Nachbearbeitungsvorrichtung 11, auch als Konditioniervorrichtung oder Corncracker bezeichnet, aufbereitet und von einem nachgeordneten Nachbeschleuniger 12 zusätzlich beschleunigt durch einen Auswurfkrümmer 13 in ein mitgeführtes Transportfahrzeug gefördert wird.

Der Feldhäcksler 1 umfasst weiterhin ein Fahrerassistenzsystem 14, welches einen Speicher 15 zum Hinterlegen von Daten und eine Rechenvorrichtung 16 zur Verarbeitung der in dem Speicher 15 hinterlegten Daten umfasst. Das Fahrerassistenzsystem 14 ist zur Ansteuerung zumindest der Häckselvorrichtung 6 eingerichtet. Des Weiteren steht das Fahrerassistenzsystem 14 mit zumindest einer an dem Feldhäcksler 1 zugeordneten Vorrichtung 18 zur Vorfelderkennung durch ein Bussystem 17 in Verbindung. Hierzu kann die Vorrichtung 18 auf einem Kabinendach des Feldhäckslers 1 sowie an dem Vorsatzgerät 2 angeordnet sein. Die Vorrichtung 18 ist insbesondere als optische Sensoreinrichtung ausgeführt, deren Signale der Rechenvorrichtung 16 des Fahrerassistenzsystems 14 zur Auswertung zugeführt werden. Dabei kann es sich um eine Kamera und/oder einen Laserscanner handeln.

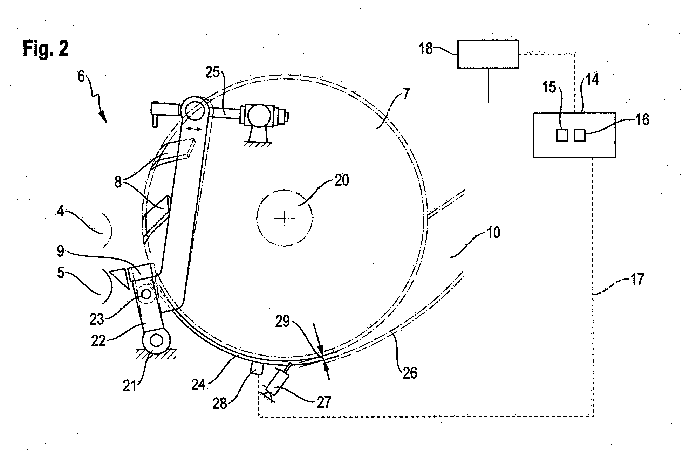

In Fig. 2 ist die Häckseltrommel 7 der Häckselvorrichtung 6 schematisch dargestellt, die um eine Drehachse 20 rotierbar ausgebildet ist. Die Häckseltrommel 7 umfasst umfangsseitig die Häckselmesser 8. Lediglich aus Gründen der Übersichtlichkeit wurde auf eine Darstellung aller über den gesamten Umfang bzw. über die gesamten 360° verteilten Häckselmesser 8 verzichtet.

Der Häckseltrommel 7 bzw. den Häckselmesser 8 ist die Gegenschneide 9 zugeordnet, sodass ein in Fig. 2 linksseitig, nicht mehr dargestelltes, ankommendes und mittels der Walzen 4, 5 vorbereitetes sowie zusammengepresstes Erntegut mittels der rotierenden Häckselmesser 8 und der Gegenschneide 9 abgeschnitten bzw. abgeschert wird. Aufgrund der entgegen dem Uhrzeigersinn gerichteten Rotation der Häckseltrommel 7 wird das abgeschnittene Erntegut beschleunigt/angetrieben und zu dem Auswurfschacht 10 weiter transportiert.

Zwischen dem Auswurfschacht 10 und der Gegenschneide 9 ist ein Trommelboden 24 vorgesehen. Der Trommelboden 24 ist Teil eines nicht näher dargestellten Trommelgehäuses, welches die Häckselvorrichtung 6 aufnimmt. Der Trommelboden 24 ist an der Gegenschneide 9 bzw. dessen Halterung 22 drehbar durch eine Lagerung bzw. ein Lager 23 gehaltert. Die Halterung 22 der Gegenschneide 9 ist an einem Auflager 21 drehbar abgestützt, insbesondere an einem nicht näher dargestellten Tragrahmen oder dergleichen.

Der Halterung 22 der Gegenschneide 9 ist ein Stellglied 25 zugeordnet, welches der Nachjustage der Gegenschneide 9 dient, um den Abstand zwischen den Häckselmessern 8 und der Gegenschneide 9 konstant zu halten. Aufgrund des Nachschleifens der Häckselmesser 8 und der Gegenschneide 9 verringert sich einerseits der wirksame Trommeldurchmesser der Häckseltrommel 7 bzw. der Häckselmesser 8 und andererseits verkürzt sich die Gegenschneide 9. Das Stellglied 25 ist beispielsweise als ein Linearmotor oder ein Hydraulikzylinder oder dergleichen ausgeführt.

Eine Aktuatorik 27, der ebenfalls als ein Linearmotor oder ein Hydraulikzylinder ausgeführt ist, vorzugsweise als ein Plungerzylinder, ist an einem der Gegenschneide 9 gegenüberliegenden Ende des Trommelbodens 24 angeordnet. Der Trommelboden 24 ist durch eine Ansteuerung der Aktuatorik 27 verstellbar, um einen Abstand 29 zwischen den Häckselmessern 8 und dem Trommelboden 24 zu variieren. Die Ansteuerung der Aktuatorik 27 erfolgt durch das Fahrerassistenzsystem 14. Vorzugsweise kann ein Leitblech 26 vorgesehen sein, welches sich an den Trommelboden 24 gutabgabeseitig anschließt.

Optional kann zur exakten Einstellung bei Inbetriebnahme des Feldhäckslers 1 bzw. der Häckseltrommel 7 unter anderem die Aktuatorik 27 eine Feineinstellung aufweisen. Hierdurch kann die exakte Ausgangsstellung bzw. die optimale Stellung des Trommelbodens 24 bei Inbetriebnahme bzw. in einer Grundeinstellung vorgenommen werden. Zur Überwachung des Abstands 29 kann ein Sensor 28 vorgesehen sein, der durch das Bussystem 17 mit dem Fahrerassistenzsystem 14 signaltechnisch verbunden ist.

Die Häckselvorrichtung 6 bildet zusammen mit dem Fahrerassistenzsystem 14 einen Häckseltrommelautomaten, indem die Rechenvorrichtung 17 dazu eingerichtet ist, zumindest eine Eigenschaft eines von dem Vorsatzgerät 2 aufzunehmenden Erntegutes mittels der Vorrichtung 18 zur Vorfelderkennung vorausschauend zu bestimmen, um den Abstand 29 zwischen der Häckseltrommel 7 bzw. den Häckselmessern 8 und dem Trommelboden 24 in Abhängigkeit von zumindest einer Eigenschaft des Erntegutes fortlaufend autonom zu ermitteln und zu adaptieren.

Mittels des Häckseltrommelautomaten soll autonom auf sich ändernde Eigenschaften des aufzunehmenden Erntegutes durch eine Veränderung des Abstandes 29 zwischen den rotierenden Häckselmessern 8 und dem Trommelboden 24 reagiert werden. So ist es sinnvoll, in Abhängigkeit vom Durchsatz des Erntegutes den Abstand 29 zu verändern. Mit zunehmendem Durchsatz an Erntegut wird der Abstand 29 vergrößert, wodurch vermieden werden kann, sodass die Häckselmesser 8 der Häckseltrommel 7 gehäckseltes Erntegut wieder mit in den Einzugsbereich zu fördern. Neben einer Homogenisierung des Gutflusses führt die Vergrößerung des Abstands 29 zu einer Optimierung des Kraftstoffbedarfs. Die Bestimmung des Durchsatzes an Erntegut erfolgt im Allgemeinen im Bereich der Einzugsvorrichtung 3. Wegen der geringen Reaktionszeit zwischen dem Detektieren einer, insbesondere schlagartig, auftretenden Schwankung im Durchsatz ist es besonders vorteilhaft, mittels der Vorrichtung 18 zur Vorfelderkennung vorausschauend eine Eigenschaftsänderung des Erntegutes erfassen und bestimmen zu können.

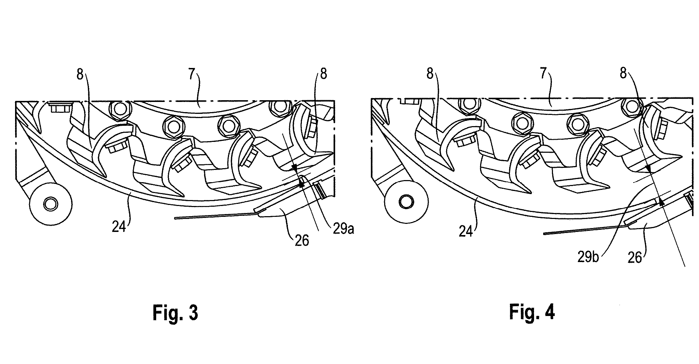

So wird der Abstand 29 bei Inbetriebnahme des Feldhäckslers 1 bzw. der Häckseltrommel 7 auf einen anpassbaren Ausgangsabstand, insbesondere einen Mindestabstand 29a, eingestellt, der eine Kollision von Trommelboden 24 mit den Häckselmessern 8 ausschließt, wie in Fig. 3 dargestellt. Dieser Mindestabstand 29a kann sich im Betrieb des Feldhäckslers 1 verändern, da durch das Nachschleifen der Häckselmesser 8 der Hüllkreis im Durchmesser kleiner wird. Eine entsprechende Anpassung ist durch das Fahrerassistenzsystem 14 vornehmbar. Der Mindestabstand 29a wird bei der Inbetriebnahme eingestellt, um Gutflussprobleme beim Aufbau des Gutstromes zu vermeiden.

Durch die zumindest eine Vorrichtung 18 zur Vorfelderkennung kann somit sichergestellt werden, dass die Größe des Abstands 29 rechtzeitig geändert wird, so dass bei einem Erreichen einer abweichenden Durchsatzmenge an der Häckseltrommel 7 der Abstand 29 bereits an einen dann optimalen Abstandswert angepasst ist.

Die zumindest eine Vorrichtung 18 zur Vorfelderkennung kann für einen optimierten Betrieb des Feldhäckslers 1 verschiedene Kriterien bereitstellen, anhand derjenigen die Einstellung und Anpassung des Abstands 29 des Trommelbodens 24 durch den Häckseltrommelautomaten autonom durchführbar ist.

So lässt sich mittels der Vorrichtung 18 auf die Art des Ernteguts und die Form des Ernteguts schließen, in welcher es dem Feldhäcksler 1 zugeführt wird. Bei einem stehenden Erntegutbestand wie beispielsweise auf einem Maisfeld können die Bestandsdichte und Bestandhöhe variieren. Hingegen wird Gras vor der Aufnahme durch den Feldhäcksler 1 geschnitten und in Gestalt einer Schwad auf dem Feld abgelegt. Entsprechend lassen sich durch die zumindest eine Vorrichtung 18 die Eigenschaften des Schwads bestimmen, d.h. dessen Kontur, und Kontinuität. Grundsätzlich wird das Ende eines Bestands oder eines Schwads auf dem Feld, d.h. das Erreichen eines Feldrandes, durch die Vorrichtung 18 erkannt, womit Maßnahmen einhergehen, wie beispielsweise das Ausheben des Vorsatzgerätes 2 für die Dauer einer Vorgewendefahrt, bevor der Feldhäcksler wieder in den Bestand einfährt. Im Zuge des Erkennens des Bestandendes durch die Vorrichtung 18 wird durch den Häckseltrommelautomaten der Trommelboden 24 zeitlich abgestimmt auf das Verlassen des Bestandes in seinen Mindestabstand 29a an die Häckseltrommel 7 überführt. Nach dem Durchfahren des Vorgewendes fährt der Feldhäcksler 1 wieder in den Bestand ein. Für den Aufbau des Gutstroms in der Häckselvorrichtung 6 wird der voreingestellte Mindestabstand 29a beibehalten. Wird ein vorgebbarer Schwellwert für den Durchsatz passiert, so führt dies zu einer Ansteuerung der Aktuatorik 27 in der Weise, dass der Abstand 29 vergrößert wird, beispielsweise auf einen Maximalabstand 29b, wie in Fig. 4 dargestellt ist.

Innerhalb eines Bestandes bzw. bei einer kontinuierlichen Gutaufnahme erfolgt eine Anpassung des Abstands 29 in Abhängigkeit von detektierten Schwankungen in der Bestandsdichte und/oder -höhe, welche den Durchsatz an Erntegut beeinflussen. Auch hier bietet eine vorausschauende Detektion durch die zumindest eine Vorrichtung 18 den Vorteil, dass derartige Änderungen früh erkannt werden, so dass der Häckseltrommelautomat eine entsprechende Anpassung des Abstandes 29 durchführen kann, bevor der Durchsatz tatsächlich abnimmt bzw. nach dem Durchfahren eines Teilabschnitts mit geringer Bestandsdicht wieder zunimmt.

Ergänzend kann ein Betriebsparameter wie die Art und/oder der Betriebszustand zumindest eines der Arbeitsaggregate Vorsatzgerät 2, Einzugsvorrichtung 3 oder Häckselvorrichtung 6 herangezogen werden. In Abhängigkeit von der Art des Erntegutes kommen an dem Feldhäcksler 1 unterschiedliche Vorsatzgeräte 2 zum Einsatz. So werden beispielsweise zur Ernte von Mais sogenannte Maisgebisse verwendet, während Gras in der Regel mittels einer sogenannten Pickup aufgenommen wird, welches als Schwad auf dem Feldboden abgelegt wurde. Diese Vorsatzgeräte 2 werden von einer Steuerungsvorrichtung des Feldhäckslers 1 angesteuert, so dass spezifische Informationen über die Art des jeweils angeschlossenen Vorsatzgerätes 2 vorliegen. In Abhängigkeit von der Art des angeordneten Vorsatzgerätes 2 kann an den Häckseltrommelautomat eine Information über das jeweilige Vorsatzgerät 2 übermittelt werden, so dass von dem Häckseltrommelautomat auf die Art des Erntegutes geschlossen werden kann. Diese Information kann zur Einstellung des vorgebbaren Ausgangsabstandes 29a herangezogen werden. Des Weiteren kann der Betriebszustand zumindest eines der Arbeitsaggregate als Betriebsparameter Berücksichtigung finden. Unter Betriebszustand ist zu verstehen, ob das jeweilige Arbeitsaggregat in Betrieb ist oder nicht. Ebenfalls ist unter einem Betriebszustand eine Arbeitsposition eines der Arbeitsgeräte zu verstehen. Insbesondere Vorsatzgeräte 2 werden aus einer Arbeitsposition in eine Nichtarbeitsposition überführt, wenn das Ende eines Bestandabschnittes erreicht wird. Für die nahezu die vollständige Dauer einer Vorgewendefahrt bleibt das Vorsatzgerät 2 in seiner Nichtarbeitsposition, bis es kurz vor einem Wiedereintritt in den Bestand in seine Arbeitsposition überführt wird. In Übereinstimmung damit kann auch der Trommelboden 24 entsprechend dem jeweiligen Betriebszustand angesteuert werden, um dessen Abstand zur Häckseltrommel 7 anzupassen. Durch die zusätzliche Berücksichtigung des Betriebszustands eines Arbeitsaggregates kann sichergestellt werden, dass eine Unterbrechung des Ernteprozesses auf einem abzuarbeitenden Feld nicht zu einer fehlerhaften Einstellung des Abstandes des Trommelbodens 24 führt.

### Bezugszeichenliste

- 1: Feldhäcksler
- 2: Vorsatzgerät
- 3: Einzugsvorrichtung
- 4: Walzen
- 5: Walzen
- 6: Häckselvorrichtung
- 7: Häckseltrommel
- 8: Häckselmesser
- 9: Gegenschneide
- 10: Auswurfschacht
- 11: Nachbearbeitungsvorrichtung
- 12: Nachbeschleuniger
- 13: Auswurfkrümmer
- 14: Fahrerassistenzsystem
- 15: Speicher
- 16: Rechenvorrichtung
- 17: Bussystem
- 18: Vorrichtung
- 20: Drehachse
- 21: Auflager
- 22: Halterung
- 23: Lager
- 24: Trommelboden
- 25: Stellglied
- 26: Leitblech
- 27: Aktuatorik
- 28: Sensor
- 29: Abstand
- 29a: Mindestabstand
- 29b: Maximalabstand

## Patentansprüche

1. Selbstfahrender Feldhäcksler (1) mit einer Einzugsvorrichtung (3), an der ein Vorsatzgerät (1) angeordnet ist, mit einer Häckselvorrichtung (6), umfassend eine rotierend angetriebene Häckseltrommel (7) mit Häckselmessern (8) und eine Gegenschneide (9) zum Zerkleinern von Erntegut sowie einen zwischen Gegenschneide (9) und einem Auswurfkanal (10) angeordneten relativ zu der Häckseltrommel (7) abstandsveränderlichen Trommelboden (24), sowie mit einem Fahrerassistenzsystem (14) zur Ansteuerung zumindest der Häckselvorrichtung (6), wobei das Fahrerassistenzsystem (14) einen Speicher (15) zum Hinterlegen von Daten und eine Rechenvorrichtung (16) zur Verarbeitung der in dem Speicher (15) hinterlegten Daten umfasst, **dadurch gekennzeichnet, dass** die Häckselvorrichtung (6) zusammen mit dem Fahrerassistenzsystem (14) einen Häckseltrommelautomaten bildet, indem die Rechenvorrichtung (16) dazu eingerichtet ist, zumindest eine Eigenschaft eines aufzunehmenden Erntegutes mittels einer Vorrichtung (18) zur Vorfelderkennung vorausschauend zu bestimmen, um den Abstand (29) zwischen der Häckseltrommel (7) und dem Trommelboden (24) in Abhängigkeit von der zumindest einen Eigenschaft des Erntegutes fortlaufend autonom zu ermitteln und zu adaptieren, wobei die Adaption des Abstands (29) in Abhängigkeit von zumindest einem Betriebsparameter des Feldhäckslers (1) erfolgt, wobei ein Betriebsparameter die Art des Vorsatzgerätes (2) ist, wobei eine Steuerungsvorrichtung des Feldhäckslers (1) das Vorsatzgerät (2) ansteuert, so dass spezifische Informationen über die Art des jeweils angeschlossenen Vorsatzgerätes (2) vorliegen, wobei in Abhängigkeit von der Art des angeordneten Vorsatzgerätes (2) an den Häckseltrommelautomaten eine Information über das jeweilige Vorsatzgerät (2) übermittelt wird, so dass von dem Häckseltrommelautomaten auf die Art des Erntegutes geschlossen wird, sodass diese Information zur Einstellung eines vorgebbaren Ausgangsabstandes (29a) herangezogen wird.

2. Feldhäcksler (1) nach Anspruch 1, **dadurch gekennzeichnet, dass** ein Betriebsparameter ein Durchsatz an Erntegut ist.

3. Feldhäcksler (1) nach Anspruch 2, **dadurch gekennzeichnet, dass** der Häckseltrommelautomat dazu eingerichtet ist, bei einem Unterschreiten eines Schwellwertes für den Durchsatz an Erntegut den Abstand (29) auf den vorgebbaren Ausgangsabstand (29a) einzustellen.

4. Feldhäcksler (1) nach Anspruch 2, **dadurch gekennzeichnet, dass** der Häckseltrommelautomat dazu eingerichtet ist, bei einem Überschreiten eines Schwellwertes für den Durchsatz an Erntegut den Abstand (29) durchsatzabhängig zu verändern.

5. Feldhäcksler (1) nach einem der Ansprüche 1 bis 4, **dadurch gekennzeichnet, dass** die Vorrichtung (18) zur Vorfelderkennung dazu eingerichtet ist, zumindest eine inhaltsstoffunabhängige Eigenschaft des sich vor dem Vorsatzgerät (2) befindlichen Erntegutes, die sich zyklisch verändert, zu detektieren.

6. Feldhäcksler (1) nach Anspruch 5, **dadurch gekennzeichnet, dass** die inhaltsstoffunabhängigen Eigenschaft das Vorhandensein von Erntegut, eine Bestands- oder Wuchsdichte oder eine Bestandshöhe des Erntegutes, die Darreichungsform des aufzunehmenden Erntegutes als noch abzuschneidender Bestand auf einem Feld oder als bereits geschnittenes Erntegut auf dem Feldboden liegend ist.

7. Feldhäcksler (1) nach einem der Ansprüche 1 bis 6, **dadurch gekennzeichnet, dass** ein Betriebsparameter der Betriebszustand zumindest eines der Arbeitsaggregate Vorsatzgerät (2), Einzugsvorrichtung (3) oder Häckselvorrichtung (6) ist.

8. Feldhäcksler (1) nach einem der Ansprüche 1 bis 7, **dadurch gekennzeichnet, dass** die Vorrichtung (18) zur vorausschauenden Vorfelderkennung zumindest eine optische Sensoreinrichtung umfasst, die dem Feldhäcksler (1) zugeordnet ist.

9. Feldhäcksler (1) nach Anspruch 8, **dadurch gekennzeichnet, dass** die optische Sensoreinrichtung elektromagnetische Wellen emittiert.

10. Feldhäcksler (1) nach Anspruch 8 oder 9, **dadurch gekennzeichnet, dass** die optische Sensoreinrichtung als eine Kamera oder ein Laserscanner ausgebildet ist.

11. Feldhäcksler (1) nach einem der vorangehenden Ansprüche, **dadurch gekennzeichnet, dass** zur Veränderung des Abstands (29) eine Aktuatorik (27) vorgesehen ist, die durch das Fahrerassistenzsystem (14) ansteuerbar ist.

12. Feldhäcksler (1) nach einem der vorangehenden Ansprüche, **dadurch gekennzeichnet, dass** ein Mittel zur Einhaltung des Ausgangsabstandes (29a) zwischen der Häckseltrommel (7) und dem Trommelboden (24) vorgesehen ist.

13. Feldhäcksler (1) nach einem der vorangehenden Ansprüche, **dadurch gekennzeichnet, dass** der Häckseltrommelautomat dazu eingerichtet ist, den Abstand (29) bei Inbetriebnahme des Feldhäckslers (1) bzw. der Häckseltrommel (7) auf einen anpassbaren Mindestabstand (29a) einzustellen, der eine Kollision des Trommelbodens (24) mit den Häckselmessern (8) ausschließt.

## Claims

1. A self-propelled forage harvester (1) with an intake device (3) on which a front attachment (1) is disposed, with a chopping device (6) comprising a chopping drum (7) with chopping knives (8) which is driven in rotation and a counter cutter (9) for the comminution of harvested material, as well as a drum floor (24) the distance of which relative to the chopping drum (7) can be varied and which is disposed between the counter cutter (9) and a discharge channel (10), as well as with a driver assistance system (14) for controlling at least the chopping device (6), wherein the driver assistance system (14) comprises a memory (15) for the storage of data and a computing device (16) for processing the data stored in the memory (15), **characterized in that** the chopping device (6) together with the driver assistance system (14) forms an automated chopping drum unit, in which the computing device (16) is configured to determine anticipatorily, by means of a device (18) for detecting the frontal area, at least one property of a harvested material to be picked up in order to continuously autonomously determine and adapt the distance (29) between the chopping drum (7) and the drum floor (24) as a function of the at least one property of the harvested material, wherein the adaptation of the distance (29) is carried out as a function of at least one operational parameter of the forage harvester (1), wherein an operational parameter is the type of front attachment (2), wherein a control device of the forage harvester (1) controls the front attachment (2) so that specific information regarding the type of the respective connected front attachment (2) is available, wherein, depending on the type of front attachment (2) which is present, information regarding the respective front attachment (2) is transmitted to the automated chopping drum unit so that a conclusion regarding the type of harvested material is drawn by the automated chopping drum unit, so that this information is drawn upon in order to set a predeterminable starting distance (29a).

2. The forage harvester (1) according to claim 1, **characterized in that** an operational parameter is a throughput of harvested material.

3. The forage harvester (1) according to claim 2, **characterized in that** the automated chopping drum unit is configured to set the distance (29) to the predeterminable starting distance (29a) in the case in which the throughput of harvested material is below a threshold value.

4. The forage harvester (1) according to claim 2, **characterized in that** the automated chopping drum unit is configured to vary the distance (29) as a function of throughput in the case in which a threshold value for the throughput of harvested material is exceeded.

5. The forage harvester (1) according to one of claims 1 to 4, **characterized in that** the device (18) for detecting the frontal area is configured to detect at least one constituent-independent property of the harvested material located in front of the front attachment (2) which changes in a cyclic manner.

6. The forage harvester (1) according to claim 5, **characterized in that** the constituent-independent property is the presence of harvested material, a field crop density or plant density or a field crop height of the harvested material, the form of presentation of the harvested material to be picked up, as the field crop on a field which has yet to be cut down or as harvested material on the field surface which has already been cut.

7. The forage harvester (1) according to one of claims 1 to 6, **characterized in that** an operational parameter is the operational state of at least one of the front attachment (2), intake device (3) or chopping device (6) working assemblies.

8. The forage harvester (1) according to one of claims 1 to 7, **characterized in that** the device (18) for anticipatory frontal area detection comprises at least one optical sensor unit which is associated with the forage harvester (1).

9. The forage harvester (1) according to claim 8, **characterized in that** the optical sensor unit emits electromagnetic waves.

10. The forage harvester (1) according to claim 8 or claim 9, **characterized in that** the optical sensor unit is constructed as a camera or a laser scanner.

11. The forage harvester (1) according to one of the preceding claims, **characterized in that**, in order to vary the distance (29), an actuator system (27) is provided which can be controlled by the driver assistance system (14).

12. The forage harvester (1) according to one of the preceding claims, **characterized in that** a means is provided for maintaining the starting distance (29a) between the chopping drum (7) and the drum floor (24).

13. The forage harvester (1) according to one of the preceding claims, **characterized in that** the automated chopping drum unit is configured to set the distance (29) upon starting up the forage harvester (1) or the chopping drum (7) to an adaptable minimum distance (29a) which rules out a collision of the drum floor (24) with the chopping knives (8).

## Revendications

1. Ensileuse automotrice (1) avec un dispositif d'alimentation (3), sur lequel est disposé un accessoire (1), avec un dispositif de hachage (6), comprenant un tambour de hachage (7) entraîné en rotation avec des couteaux de hachage (8) et une contre-lame (9) destinée à broyer un produit de récolte ainsi qu'un fond de tambour (24) placé à une distance variable par rapport au tambour de hachage (7), disposé entre la contre-lame (9) et un canal d'éjection (10), ainsi qu'avec un système d'aide à la conduite (14) destiné à piloter au moins le dispositif de hachage (6), dans laquelle le système d'aide à la conduite (14) comprend une mémoire (15) destinée à enregistrer des données et un dispositif de calcul (16) destiné à traiter des données enregistrées dans la mémoire (15), **caractérisée en ce que** le dispositif de hachage (6) forme conjointement avec le système d'aide à la conduite (14) un tambour de hachage automatique **en ce que** le dispositif de calcul (16) est mis au point pour définir à l'avance au moins une propriété d'un produit de récolte à recevoir au moyen d'un dispositif (18) d'identification d'avant-plan pour déterminer et adapter de manière autonome en continu la distance (29) entre le tambour de hachage (7) et le fond de tambour (24) en fonction de l'au moins une propriété du produit de récolte, dans laquelle l'adaptation de la distance (29) est effectuée en fonction d'au moins un paramètre de fonctionnement de l'ensileuse (1), dans laquelle un paramètre de fonctionnement est le type de l'accessoire (2), dans laquelle un dispositif de commande de l'ensileuse (1) pilote l'accessoire (2) de telle sorte que des informations spécifiques sur le type de l'accessoire (2) respectivement raccordé sont disponibles, dans laquelle une information sur l'accessoire (2) respectif est transmise au tambour de hachage automatique en fonction du type de l'accessoire (2) disposé de telle sorte que le tambour de hachage automatique déduit le type du produit de récolte si bien que cette information est prise en compte pour régler une distance de départ (29a) pouvant être spécifiée.

2. Ensileuse (1) selon la revendication 1, **caractérisée en ce qu'**un paramètre de fonctionnement est un débit de produit de récolte.

3. Ensileuse (1) selon la revendication 2, **caractérisée en ce que** le tambour de hachage automatique est mis au point pour régler la distance (29) sur la distance de départ (29a) pouvant être spécifiée lors d'un non-dépassement d'une valeur de seuil pour le débit de produit de récolte.

4. Ensileuse (1) selon la revendication 2, **caractérisée en ce que** le tambour de hachage automatique est mis au point pour modifier la distance (29) selon le débit lors d'un dépassement d'une valeur de seuil pour le débit de produit de récolte.

5. Ensileuse (1) selon l'une quelconque des revendications 1 à 4, **caractérisée en ce que** le dispositif (18) d'identification d'avant-plan est mis au point pour détecter au moins une propriété, ne dépendant pas du contenu, du produit de récolte se trouvant devant l'accessoire (2), qui varie de manière cyclique.

6. Ensileuse (1) selon la revendication 5, **caractérisée en ce que** la propriété ne dépendant pas du contenu est la présence de produit de récolte, une densité du stock ou de la croissance ou un niveau de stock du produit de récolte, la forme du produit de récolte à recevoir se trouvant sur un champ sous la forme d'un stock restant à découper ou sous la forme d'un produit de récolte déjà coupé au sol.

7. Ensileuse (1) selon l'une quelconque des revendications 1 à 6, **caractérisée en ce qu'**un paramètre de fonctionnement est l'état de fonctionnement d'au moins un des modules de travail accessoire (2), dispositif d'alimentation (3) ou dispositif de hachage (6).

8. Ensileuse (1) selon l'une quelconque des revendications 1 à 7, **caractérisée en ce que** le dispositif (18) d'identification d'avant-plan à l'avance comprend au moins un système de capteur optique, qui est associé à l'ensileuse (1).

9. Ensileuse (1) selon la revendication 8, **caractérisée en ce que** le système de capteur optique émet des ondes électromagnétiques.

10. Ensileuse (1) selon la revendication 8 ou 9, **caractérisée en ce que** le système de capteur optique est réalisé en tant qu'une caméra ou un scanner laser.

11. Ensileuse (1) selon l'une quelconque des revendications précédentes, **caractérisée en ce qu'**est prévu pour modifier la distance (29) un mécanisme actionneur (27), qui peut être piloté par le système d'aide à la conduite (14).

12. Ensileuse (1) selon l'une quelconque des revendications précédentes, **caractérisée en ce qu'**un moyen destiné à respecter la distance de départ (29a) entre le tambour de hachage (7) et le fond de tambour (24) est prévu.

13. Ensileuse (1) selon l'une quelconque des revendications précédentes, **caractérisée en ce que** le tambour de hachage automatique est mis au point pour régler, lors de la mise en service de l'ensileuse (1) ou du tambour de hachage (7), la distance (29) sur une distance minimale (29a) pouvant être adaptée, qui exclut une collision du fond de tambour (24) avec les couteaux de hachage (8).
